# EUROPEAN PATENT SPECIFICATION

(11) **EP 2 390 053 B1**
(45) Date of publication and mention of the grant of the patent: **01.07.2015**
(21) Application number: 11167477.6
(22) Date of filing: 25.05.2011
(51) Int. Cl.: B25D 17/04, B25D 17/24, B23Q 11/00

(54) **Impact tool**
Schlagwerkzeug
Outil d'impact

(30) Priority: 26.05.2010 JP 2010120899
(43) Date of publication of application: 30.11.2011
(73) Proprietor: Makita Corporation, Anjo Aichi 446-8502 (JP)
(72) Inventor: Takeuchi, Hajime, Anjo, Aichi 446-8502 (JP); Furusawa, Masanori, Anjo, Aichi 446-8502 (JP)
(74) Representative: Kramer Barske Schmidtchen Patentanwälte PartG mbB

(56) References cited:
- EP-A1- 1 842 612
- DE-A1- 4 342 022
- JP-A- 11 058 111

## Description

### BACKGROUND OF THE INVENTION

### Field of the Invention

The invention relates to a dust collecting technique for collecting dust generated when an impact tool performs a predetermined operation.

### Description of the Related Art

EP 1 842 612 A1 discloses a dust collecting cup for an electric tape such as a hammer drill, according to the preamble of claim 1.

In an impact tool for performing a hammering operation or a hammer drill operation on a workpiece such as concrete by a tool bit, dust is generated during operation. Therefore, known impact tools are provided with a dust collecting device for sucking dust generated during operation. For example, Japanese laid-open patent publication No. 2007-301717 discloses a dust collecting device in which dust generated during operation is sucked by a cylindrical hood disposed to surround the tool bit.

Dust is sucked into the cylindrical hood through a suction port of the hood and collected into a dust collector disposed outside of the impact tool, through a dust collecting hose connected to the hood. The dust collecting hose connected to the hood needs to be securely fixed so as to be prevented from slipping out of the hood by vibration caused during operation.

### SUMMARY OF THE INVENTION

Accordingly, it is an object of the invention to prevent a slipping-off of a dust collecting hose in an impact tool having a dust collecting device.

Above described object is achieved by the claimed invention. According to the invention, an impact tool according to claim 1 is provided which performs a predetermined operation at least by linearly driving a tool bit coupled to a front end region of a tool body in its axial direction. The impact tool is provided with a dust collecting device which is mounted to the tool body and has a dust suction port for sucking dust generated during operation by the tool bit and a dust transfer passage for transferring dust sucked through the dust suction port. The dust collecting device further has a dust collecting hose which has a bellows-like part and through which dust flowing through the dust transfer passage is led to the outside, a hose mounting region to which the dust collecting hose is attached so as to communicate with the dust transfer passage, and a dust collecting hose slip-off preventing member which is provided in the hose mounting region and prevents the dust collecting hose attached to the hose mounting region from slipping out of the hose mounting region by engagement with the bellows-like part of the dust collecting hose.

Further, the "dust suction port" and the "dust transfer passage" in the invention are typically disposed to surround the tool bit and formed by a cylindrical bit covering part having an open front end. The "hose mounting region" in the invention is provided in the vicinity of a dust outlet which is open on the side opposite to the dust suction port in an axial direction of the dust transfer passage, and is typically formed on the dust outlet side of the bit covering part. Further, the manner in which the hose is "attached" in the invention typically represents the manner in which one end of the hose is fitted in the dust outlet formed in the hose mounting region, and this fitting manner includes both the manner in which the hose is fitted into the dust outlet and the manner in which the hose is fitted onto the dust outlet. The manner of "engagement with the bellows-like part" in the invention typically represents the manner in which one or more projections are inserted in grooves (recesses) of the bellows. Further, it is only necessary for the bellows-like part to be provided at least in part of the dust collecting hose.

With the construction in which the dust collecting hose slip-off preventing member which is engaged with the bellows-like part of the dust collecting hose is provided in the hose mounting region, the dust collecting hose can be prevented from moving in its extending direction with respect to the hose mounting region, so that the dust collecting hose can be prevented from slipping out of the dust collecting device. Particularly, slip-off prevention of the dust collecting hose is made by utilizing the shape of the bellows-like part having depressions and projections, so that the dust collecting hose can be securely fixed even with a simple structure.

According to a further embodiment of the invention, the dust collecting device can be detached from the tool body. Further, a dust collecting passage is formed in the tool body. One end of the dust collecting hose is attached to the hose mounting region, and the other end is attached to the tool body by fitting to an open end of the dust collecting passage. Further, the fitting manner includes both the manner in which the dust collecting hose is fitted into the open end and the manner in which the dust collecting hose is fitted onto the open end.
The dust collecting hose is securely fixed to the dust collecting device by the dust collecting hose slip-off preventing member, so that the dust collecting hose can be prevented from being slipped out of the dust collecting device and left on the tool body side when the dust collecting device mounted to the tool body is detached from the tool body.

According to another aspect of the invention, a representative impact tool is provided to perform a predetermined operation at least by linearly driving a tool bit coupled to a front end region of a tool body in its axial direction. The impact tool includes a dust collecting device, a body side mounting region and a dust collecting device side mounting region. The dust collecting device sucks and collects dust generated during an operation by the tool bit. The body side mounting region is formed in the tool body. The body side mounting region attaches the dust collecting device to the tool body. The dust collecting device side mounting region is formed in the dust collecting device. One of the body side mounting region and the dust collecting device side mounting region has a plurality of projections which extend in an axis direction of the tool bit and are arranged around the axis, and the other has a plurality of grooves which extend in the axis direction of the tool bit and are engaged with the projections, and a plurality of ridges provided between the grooves around an axis of the tool bit. The representative impact tool further includes a clamping member that clamps the body side mounting region and the dust collecting device side mounting region by fitting thereon from the outside. When the dust collecting device is attached to the tool body by engagement of the projections with the grooves, outer surfaces of the projections and top surfaces of the ridges are flush with each other in the circumferential direction. The clamping member uniformly clamps the regions flush with each other, whereby the dust collecting device is fixedly attached to the tool body.

As one aspect of the invention the clamping member may include a side grip which is removably attached to the tool body and designed to be held by a user in order to operate the impact tool. Further, the side grip may include a band which attaches the side grip to the tool body, while the band also defines the clamping member for the dust collecting device. Further, at least one of the grooves may include a slipping preventing mechanism such that the projection engaged with the groove is prevented from slipping axially forward out of the grooves.

A technique is provided which contributes to slip-off prevention for a dust collecting hose designed as a dust transfer hose in an impact tool having a dust collecting device.
Other objects, features and advantages of the present invention will be readily understood after reading the following detailed description together with the accompanying drawings and the claims.

### BRIEF DESCRIPTION OF THE DRAWINGS

FIG. 1 is a side view, partly in section, showing an entire structure of a hammer drill having a dust collecting attachment according to an embodiment of the invention.
FIG. 2 is a sectional view showing the entire structure of the dust collecting attachment.
FIG. 3 is a sectional view taken along line A-A in FIG. 2.
FIG. 4 is an enlarged view showing part of FIG. 2.
FIG. 5 is a sectional view taken along line B-B in FIG. 2.
FIG. 6 schematically illustrates the dust collecting attachment directly connected to an outside dust collector.

### DETAILED DESCRIPTION OF THE INVENTION

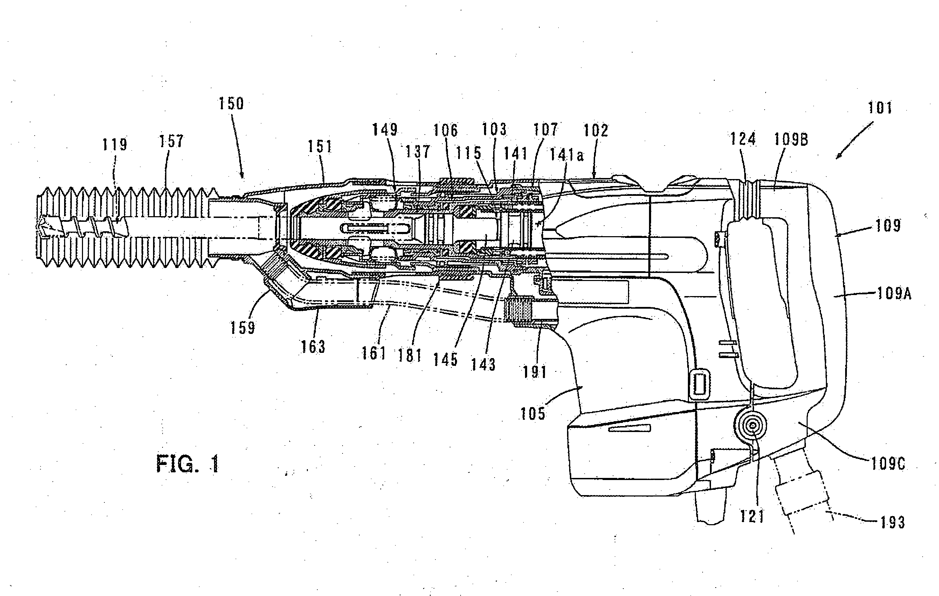

Each of the additional features and method steps disclosed above and below may be utilized separately or in conjunction with other features and method steps to provide and manufacture improved impact tools and method for using such impact tools and devices utilized therein. Representative examples of the present invention, which examples utilized many of these additional features and method steps in conjunction, will now be described in detail with reference to the drawings. This detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention, which detailed description will now be given with reference to the accompanying drawings.
An embodiment of the invention is now described with reference to FIGS. 1 to 6. In this embodiment, an electric hammer drill is explained as a representative example of an impact tool according to this invention. As shown in FIG. 1, a hammer drill 101 according to this embodiment mainly includes an outer housing 102 that forms an outer shell of the hammer drill 101, a body 103 that is partially covered by the outer housing 102, a hammer bit 119 detachably coupled to a front (left as viewed in FIG. 1) end region of the body 103 via a hollow tool holder 137, and a handle in the form of a handgrip 109 that is designed to be held by a user and connected to the outer housing 102 on the side opposite to the hammer bit 119. The hammer bit 119 is held by the tool holder 137 such that it is allowed to reciprocate in its axial direction with respect to the tool holder. The outer housing 102 and the body 103 are features that correspond to the "tool body" in the invention, and the hammer bit 119 is a feature that corresponds to the "tool bit" in the invention. Further, the outer housing 102 and the body 103 correspond to the "outer-shell housing" and the "inner body", respectively, in claim 4 of the invention. For the sake of convenience of explanation, the hammer bit 119 side is taken as the front, and the handgrip 109 side as the rear.

The body 103 is formed by a motor housing 105 that houses a driving motor (not shown) and a gear housing 107 that includes a generally cylindrical barrel 106 and houses a motion converting mechanism (not shown), a striking part 115 and a power transmitting mechanism (not shown). A rotating output of the driving motor is appropriately converted into liner motion by the motion converting mechanism which is mainly formed by a crank mechanism and then transmitted to the striking part 115. As a result, an impact force is generated in the axial direction of the hammer bit 119 (the horizontal direction as viewed in FIG. 1) via the striking part 115. The motion converting mechanism and the striking part 115 form a striking mechanism part. Further, the power transmitting mechanism which mainly includes a plurality of gears appropriately reduces the speed of the rotating output of the driving motor and then transmits it to the hammer bit 119 via a final axis in the form of the tool holder 137, so that the hammer bit 119 is caused to rotate in the circumferential direction. Further, the driving motor is driven when the user depresses a trigger 109a disposed on the handgrip 109.

The striking part 115 mainly includes a striking element in the form of a striker 143 that is slidably disposed within a bore of the cylinder 141 together with a piston of the crank mechanism, and an intermediate element in the form of an impact bolt 145 that is slidably disposed within the tool holder 137. The striker 143 is driven via an air spring action (pressure fluctuations) of an air chamber 141 a of the cylinder 141 by sliding movement of the piston and collides with (strikes) the impact bolt 145. The striker 143 then transmits a striking force caused by the collision to the hammer bit 119 via the impact bolt 145.

When the driving motor is driven, the rotating output of the driving motor is converted into linear motion via the motion converting mechanism and then causes the hammer bit 119 to perform linear motion in its axial direction or striking movement via the striking part 115. Further, not only the above-described striking movement but rotation is transmitted to the hammer bit 119 via the power transmitting mechanism driven by the rotating output of the driving motor, so that the hammer bit 119 is also caused to rotate in the circumferential direction. Specifically, during operation in hammer drill mode, the hammer bit 119 performs striking movement in the axial direction and rotation in the circumferential direction, so that a hammer drill operation is performed on a workpiece. On the other hand, during operation in hammer mode, transmission of rotative power via the power transmitting mechanism is interrupted by a clutch. Therefore, the hammer bit 119 performs only the striking movement in the axial direction, so that a hammering operation is performed on the workpiece.

The outer housing 102 covers an upper region of the body 103 which houses the striking mechanism part, or the barrel 106 and the gear housing 107. Further, a chuck 149 is disposed in the front end region of the tool holder 137 in order to detachably couple the hammer bit 119 to the tool holder 137. The chuck 149 is exposed to the outside without being covered by the outer housing 102. Although not shown, the outer housing 102 is connected to the body 103 at several points via a plurality of vibration-proofing elastic rubbers and can move at least in the axial direction of the hammer bit 119 with respect to the body 103. In other words, the outer housing 102 has a vibration-proof housing structure in which it is supported on the body 103 via the elastic rubbers. Therefore, the outer housing 102 is rendered vibration-proof at least in the axial direction of the hammer bit 119.

The handgrip 109 has a grip region 109A extending in a vertical direction transverse to the axial direction ofthe hammer bit 119 and horizontal connecting regions 109B, 109C extending forward from upper and lower ends of the grip region 109A, and is generally D-shaped as viewed from the side. Further, ends of the upper and lower connecting regions 109B, 109C are connected to the rear end of the outer housing 102. Specifically, the lower connecting region 109C of the handgrip 109 is connected to a lower rear end of the outer housing 102 such that it can pivot on a pivot 121 in the axial direction of the hammer bit 119, while the upper connecting region 109B is connected to an upper rear end of the outer housing 102 via a vibration-proofing compression coil spring (which is covered by an extensible bellows-like dust-proofing cover 124 in FIG. 1) such that it can move in the axial direction of the hammer bit 119 with respect to the outer housing.

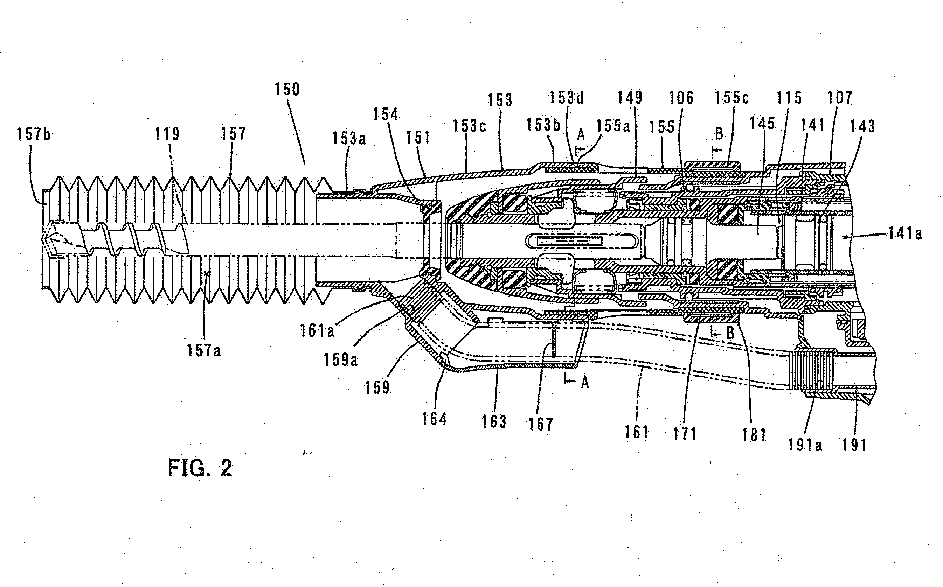

A dust collecting attachment 150 which is attached to the hammer drill 101 constructed as described above and serves to suck and collect dust generated during operation on the workpiece (such as concrete) is now explained with reference to FIGS. 2 to 6. The dust collecting attachment 150 is a feature that corresponds to the "dust collecting device" in the invention.

The dust collecting attachment 150 according to this embodiment entirely covers the hammer bit 119 and is suitably applied to an electric hammer drill which is capable of performing not only a hammering operation in which the hammer bit 119 is caused to linearly move in its axial direction, but also a hammer drill operation (for drilling) in which the hammer bit 119 is caused to rotate around its axis while linearly moving in its axial direction. The dust collecting attachment 150 is attached to a front end region of the outer housing 102 such that it covers the front end region of the outer housing 102 and the chuck 149 attached to the front end region of the tool holder 137.

The dust collecting attachment 150 according to this embodiment mainly includes a generally cylindrical mounting part 151 made of synthetic resin and having both ends open in its longitudinal direction, and a generally cylindrical bellows-like rubber bit covering part 157 which can expand and contract in the axial direction of the hammer bit 119 and has both ends open in the longitudinal direction.

The cylindrical mounting part 151 includes a front cylindrical portion 153 and a rear cylindrical portion 155 connected to the front cylindrical portion 153. The front cylindrical portion 153 is a cylindrical member having a small-diameter cylindrical portion 153a formed on a bit covering part 157 side (the front side), a large-diameter cylindrical portion 153b formed on the opposite side (the rear side), and a tapered cylindrical portion 153c formed in an intermediate region therebetween and tapered toward the small-diameter cylindrical portion 153a. The small-diameter cylindrical portion 153a is designed as a connecting region for connection with the bit covering part 157 and connected to the bit covering part 157 by fitting into a rear end opening of the bit covering part 157 from the rear. Further, a rubber seal 154 is attached to the rear end of the small-diameter cylindrical portion 153a and serves to seal a gap between an inner circumferential surface ofthe small-diameter cylindrical portion 153a and an outer circumferential surface of the hammer bit 119.

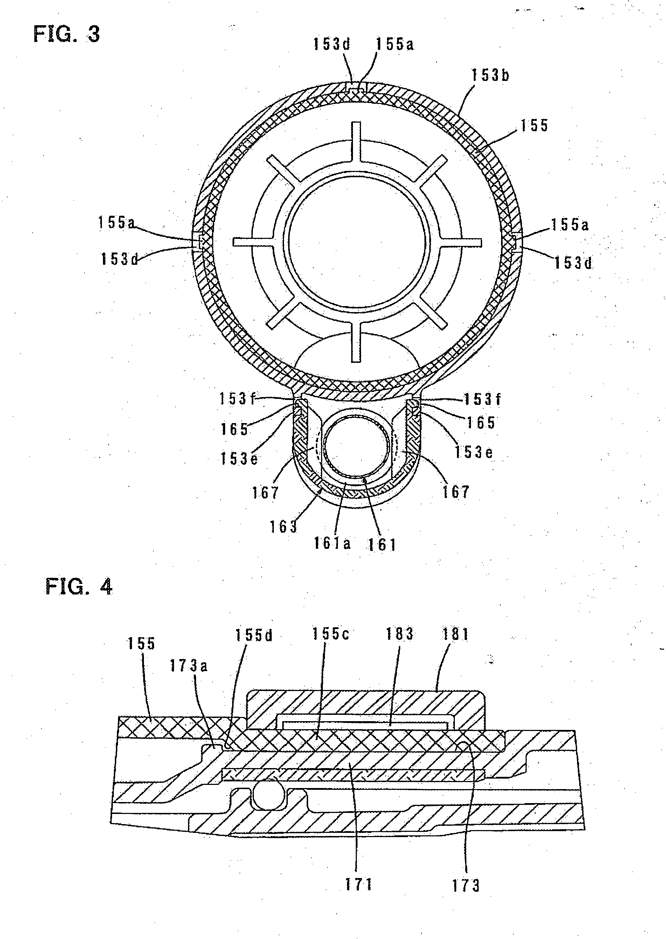

As shown in FIGS. 2 and 3, a plurality of protrusions 155a are formed on an outer surface of one axial end (front end) region of the rear cylindrical portion 155 and arranged at predetermined intervals in the circumferential direction. When one end of the rear cylindrical portion 155 is fitted into the large-diameter cylindrical portion 153b from the rear, the protrusions 155a are elastically engaged with an opening 153d formed in the large-diameter cylindrical portion 153b of the front cylindrical portion 153, so that the rear cylindrical portion 155 is prevented from slipping out ofthe front cylindrical portion 153. Thus, the front cylindrical portion 153 and the rear cylindrical portion 155 are connected in one piece.

The rear cylindrical portion 155 extents in the axial direction and is designed as a split cylindrical portion which is split into several pieces in the circumferential direction by a plurality of slits 155b having a closed front end and an open rear end in the axial direction. Specifically, the rear cylindrical portion 155 is split by the slits 155b such that a plurality of axially extending projections 155c are formed and arranged in a cylindrical shape as a whole. Each of the projections 155c formed by splitting the cylindrical portion 155 via the slits 155b is allowed to elastically deform in the radial direction.

When the cylindrical mounting part 151 is mounted to a grip mounting part 171, the bit covering part 157 of the dust collecting attachment 150 is disposed to cover the hammer bit 119. The bit covering part 157 entirely covers the hammer bit 119 and forms a passage 157a (space) for dust between the outer surface of the hammer bit 119 and the inner surface of the bit covering part 157. The front open end of the bit covering part 157 is designed as a dust suction port 157b and the tip end of the hammer bit 119 is placed in the dust suction port 157b. Further, a rear open end ofthe bit covering part 157 is removably fitted onto the small-diameter cylindrical portion 153a of the front cylindrical portion 153 of the cylindrical mounting part 151. Thus, the bit covering part 157 is designed to be removable from the cylindrical mounting part 151. The dust suction port 157b and the passage 157a are features that correspond to the "dust suction port" and the "dust transfer passage", respectively, in the invention.

A hose connecting part 159 is formed in the small-diameter cylindrical portion 153a of the cylindrical mounting part 151 and communicates with the passage 157a of the bit covering part 157. The hose connecting part 159 protrudes obliquely rearward from an outside lower surface of the small-diameter cylindrical portion 153a, and a dust transfer hose 161 is connected to the hose connecting part 159. The hose connecting part 159 has a dust outlet 159a through which dust flows out from the passage 157a of the bit covering part 157 to the dust transfer hose 161. The hose connecting part 159 and the dust transfer hose 161 are features that correspond to the "hose mounting region" and the "dust collecting hose", respectively, in the invention.

The dust transfer hose 161 is a tubular member which is made of rubber or resin and includes a bellows-like part at least in part. One end (front end) of the dust transfer hose 161 is fitted into the dust outlet 159a of the hose connecting part 159, so that the dust transfer hose 161 is connected to the passage 157a of the bit covering part 157. The dust transfer hose 161 connected to the bit covering part 157 extends rearward along the outer surface of the cylindrical mounting part 151 and the other end (rear end) of the dust transfer hose 161 is fitted into a front open end 191 a of a dust collecting passage 191 formed in the body 103 of the hammer drill 101, so that the dust transfer hose 161 is connected to the body 103. Specifically, the dust transfer hose 161 is connected between the bit covering part 157 of the dust collecting attachment 150 and the body 103.

Further, although not shown, the dust collecting passage 191 of the body 103 mainly includes a pipe which extends in a direction generally parallel to the axial direction of the hammer bit 119 through an inner space of the body 103, and a flexible hose which is connected to a rear open end of the pipe and extends downward through a rear inner space of the outer housing 102. As shown in FIG. 1, an extending end of the hose communicates with a hose connecting port which is formed in a connecting region 109C in a lower region of the handgrip 109. In FIG. 1, a dust collector hose 193 of a dust collector is shown fitted into the hose connecting port.

As shown in FIGS. 2 and 3, a hose cover 163 is attached to the hose connecting part 159 to which the dust transfer hose 161 is connected, and covers the dust transfer hose 161 fitted into the dust outlet 159a, from below (from a direction transverse to the extending direction of the dust transfer hose). The hose cover 163 has a tub-like shape having a generally semi-circular section and an open top. Further, hook-like engagement claws 164, 165 are formed on both ends of the hose cover 163 in the longitudinal direction. As shown in FIG. 2, the engagement claw 164 on one (left as viewed in FIG. 2) end of the hose cover 163 is engaged with an edge of the opening of the dust outlet 159a of the hose connecting part 159 from inside. As shown in FIG. 3, the engagement claws 165 on the other end are formed on both upper edges of the open top of the hose cover 163. Further, a notch 153f is formed in each ofmounting walls 153e which protrude downward from an outer lower surface of the large-diameter cylindrical portion 153b of the front cylindrical portion 153 and are opposed to each other, and the engagement claws 165 are engaged with the notches 153f from inside. Specifically, the hose cover 163 can be attached to the hose connecting part 159 by engagement of the engagement claws 164, 165 with the hose connecting part 159 and detached from the hose connecting part 159 by disengagement of the engagement claws 164, 165 from the hose connecting part 159.

As shown in FIG. 3, rib-like engagement members 167 are formed on an inner surface of the hose cover 163 and opposed to each other and protrude in a direction transverse to the inner surface ofthe hose cover. The engagement members 167 are engaged with recesses (grooves) of a bellows-like part 161 a of the dust transfer hose 161, so that the dust transfer hose 161 is prevented from moving in its axial direction. With such a construction, the dust transfer hose 161 fitted into the dust outlet 159a of the hose connecting part 159 is prevented from slipping out of the dust outlet 159a. The hose cover 163 is a feature that corresponds to the "hose slip-off preventing member" and the "covering member" in the invention.

The dust collecting attachment 150 constructed as described above, however, is not needed depending on mode of operation of the hammer drill 101. Therefore, it is preferable that the dust collecting attachment 150 is provided with a mounting structure for removably mounting it to the hammer drill 101, or particularly a mounting structure which allows easy attachment or detachment of the dust collecting attachment.

The mounting structure for mounting the dust collecting attachment 150 to the hammer drill 101 1 which is constructed to satisfy the above-described desire is now explained mainly with reference to FIGS. 2, 4 and 5.

A front end region of the outer housing 102 which covers the barrel 106 has a hollow shape having a generally circular section, and a grip mounting part 171 is formed in this front end region. The grip mounting part 171 is formed by a circumferential surface having a predetermined width and extending in parallel to the longitudinal direction of the outer housing 102. The dust collecting attachment 150 is fitted onto the chuck 149 and the front end region ofthe outer housing 102 by moving the cylindrical mounting part 151 rearward from the front (left as viewed in FIG. 2) of the hammer drill 101. In this state, the projection 155c of the rear cylindrical portion 155 which is described above is fixed to the grip mounting part 171 by using a side grip 181.

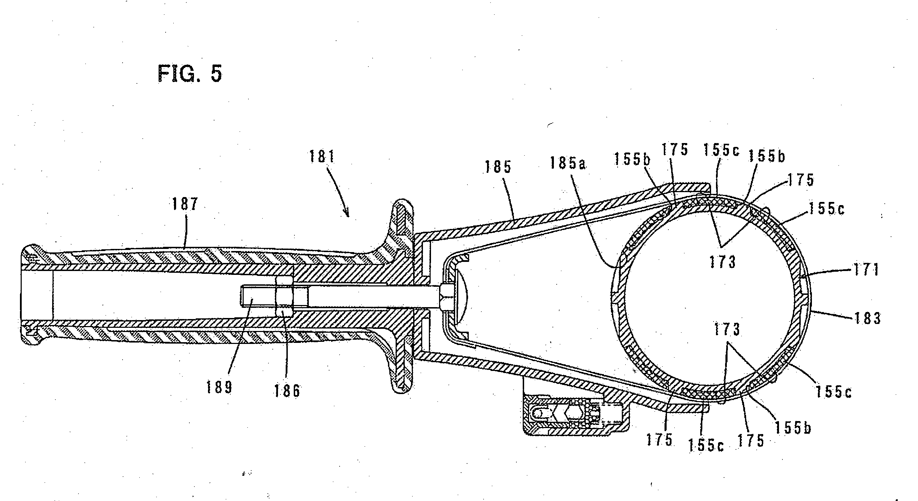

As shown in FIG. 5, in this embodiment, a plurality of longitudinally extending recesses 173 are formed in the outer surface of the grip mounting part 171 in the circumferential direction. Further, a plurality of ridges 175 are formed between adjacent recesses 173 on the outer surface of the grip mounting part 171 and the ridges protrude radially and extend in the axial direction and have a curved outer surface (top surface). The projections 155c of the rear cylindrical portion 155 of the dust collecting attachment 150 can be fitted in the recesses 173 of the grip mounting part 171. The outer surface of the projection 155c is substantially flush with the outer surface of the ridge 175 when the projection 155c is fitted in the recess 173. The rear cylindrical portion 155 of the dust collecting attachment 150 and the projections 155c are features that correspond to the "dust collecting device side mounting region" and the "projections", respectively, in (1) of the invention. Further, the grip mounting part 171, the recesses 173 and the ridges 175 are features that correspond to the "body side mounting region", the "groove" and the "ridge", respectively, in (1) of the invention. As shown in FIG. 4, each of the projections 155c has a stepped portion 155d on its front inner surface in the longitudinal direction. When the projection 155c is fitted in the recess 173 by utilizing elastic deformation, the stepped portion 155d is engaged with a front edge 173a of the recess 173, so that the projection 155c is prevented from slipping axially forward out of the recess 173. Specifically, the stepped portion 155d of the projection 155c and the front edge 173a of the recess 173 form a simple slip-off prevention structure for the projection 155c.

As shown in FIG. 5, the side grip 181 mainly includes a band 183 which is wrapped around the grip mounting part 171 of the barrel 106, a base 185 which is disposed on the end ofthe band 183 and has a generally U-shaped engagement surface 185 a engaged with the outer surface ofthe grip mounting part 171, a grip 187 which is connected to the base 185 such that it can rotate around the axis of the base 185 with respect to the base 185, and a tightening threaded rod 189 for tightening the band 183. The threaded rod 189 is loosely inserted through the centers ofthe grip 187 and the base 185 and extends in the longitudinal direction. Further, one end ofthe threaded rod 189 is connected to an end of the band 183 and the other end is threadably engaged with a nut 186 disposed within the grip 187. The nut 186 is prevented from rotating with respect to the grip 187. Therefore, by turning the grip 187 clockwise or counterclockwise around its axis, the tightening threaded rod 189 threadably engaged with the nut 186 is moved forward or backward in the longitudinal direction, so that the band 183 can be tightened or loosened. The side grip 181 is a feature that corresponds to the "clamping member" in (1) of the invention.

The side grip 181 is fixed to the grip mounting part 171 by tightening the band 183. At the same time, by this tightening operation, the projection 155c of the rear cylindrical portion 155 fitted in the recess 173 of the grip mounting part 171 is also clamped. Specifically, the projection 155c of the rear cylindrical portion 155 is pressed against the bottom of the recess 173, so that the dust collecting attachment 150 is securely fixed to the grip mounting part 171 together with the side grip 181. When the band 183 is loosened and the projection 155c of the rear cylindrical portion 155 is pulled axially forward, the stepped portion 155d climbs over the front edge 173a of the recess 173 by elastic deformation, so that the projection 155c of the rear cylindrical portion 155 can be removed from the recess 173 of the grip mounting part 171. Thus the dust collecting attachment 150 can be detached from the grip mounting part 171.

Specifically, with the mounting structure of the dust collecting attachment 150 according to this embodiment, the dust collecting attachment 150 can be detached by loosening the band 183 without detaching the side grip 181 from the grip mounting part 171. Further, by reversing the procedure, or specifically by inserting and fitting the projection 155c into the recess 173 of the grip mounting part 171 from the front in the axial direction, the dust collecting attachment 150 can be attached. Specifically, according to this embodiment, the dust collecting attachment 150 can be easily attached to and detached from the hammer drill 101.

According to the dust collecting attachment 150 constructed as described above, dust generated during operation such as drilling operation by the hammer bit 119 is sucked into the passage 157a of the bit covering part 157 through the dust suction port 157b of the bit covering part 157 and then collected into a dust collector through the dust transfer hose 161, the dust collecting passage 191 of the body 103 and the dust collector hose 193.

As described above, in this embodiment, the hose cover 163 is attached to the hose connecting part 159 and the engagement member 167 of the hose cover 163 is engaged with the recess of the bellows-like part 161a of the dust transfer hose 161, so that the dust transfer hose 161 is prevented from slipping off. With this construction, the dust transfer hose 161 can be securely fixed even with a simple mounting structure, and the dust transfer hose 161 can be prevented from slipping out of the dust collecting attachment 150.

The dust collecting attachment 150 is not needed depending on mode of operation of the hammer drill 10, and in such a case, it is detached from the hammer drill 101. At this time, the dust transfer hose 161 is securely fixed to the dust collecting attachment 150 by the hose cover 163, so that the dust transfer hose 161 can be prevented from being slipped out of the hose connecting part 159 and left on the body 103 side of the hammer drill 101 when the dust collecting attachment 150 is detached from the hammer drill 101.

Further, according to this embodiment, the hose cover 163 extends generally in parallel to the axial direction of the hammer bit 119, and the dust transfer hose 161 is connected to the hose connecting part 159 and extends to the dust collecting passage 191 of the body 103. The hose cover 163 also serves as a member for supporting the dust transfer hose 161 from below such that the dust transfer hose 161 extends along the outer surface of the cylindrical mounting part 151. Therefore, the dust transfer hose 161 can be prevented from hanging down.

Further, the dust transfer hose 161 is connected between the dust collecting attachment 150 attached to the outer housing 102 having the vibration-proof housing structure and a vibrator in the form of the body 103. Therefore, when the dust collecting attachment 150 and the body 103 are caused to move in the longitudinal direction with respect to each other by vibration caused during operation, the dust transfer hose 161 is affected by this movement. According to this embodiment, however, with the construction in which the dust transfer hose 161 is prevented from slipping off by the hose cover 163, the dust transfer hose 161 can be prevented from slipping out of the dust collecting attachment 150, even if the invention is applied to the vibration-proof housing structure.

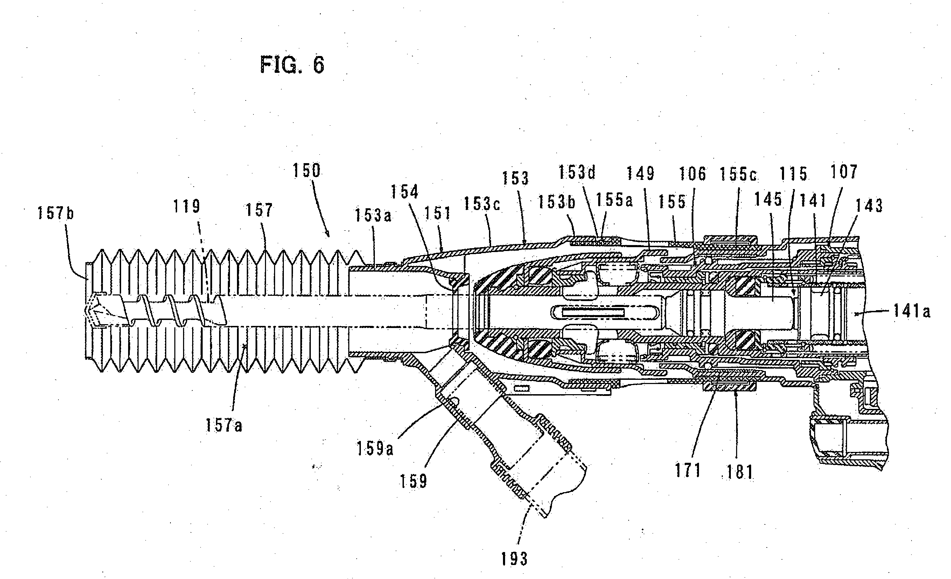

Further, the hose cover 163 according to this embodiment is detachable. Therefore, in use, the dust collecting attachment 150 can also be directly connected to the dust collector by detaching both the hose cover 163 and the dust transfer hose 161 and connecting the dust collector hose 193 to the dust outlet 159a of the hose connecting part 159 as shown in FIG. 6.

Further, in this embodiment, the engagement member 167 for preventing the dust transfer hose 161 from slipping off is provided on the hose cover 163, so that the hose cover 163 also serves as a slip-off preventing member. This construction may however be changed such that the slip-off preventing member is separately provided.
Further, in this embodiment, the hose cover 163 is detachable via the plurality of engagement claws 164, 165, but this construction may be changed such that one end of the hose cover 163 in the extending direction or one end of the hose cover 163 in a direction transverse to the extending direction is rotatably connected to the hose connecting part 159, and the other end has an engagement structure by an engagement claw.

Further, in the above-described embodiment, the hammer drill 101 1 is described in which the hammer bit 119 performs hammering movement in its axial direction and drilling movement in its circumferential direction, but the invention may also be applied to a hammer drill in which the hammer bit 119 performs only hammering movement in its axial direction.

In view of the scope and spirit of the above-described invention, the following features can be provided.
(Aspect 1) An impact tool, which performs a predetermined operation at least by linearly driving a tool bit coupled to a front end region of a tool body in its axial direction, comprising:
   a dust collecting device that is mounted to the tool body and has a dust suction port for sucking dust generated during operation by the tool bit and a dust transfer passage for transferring dust sucked through the dust suction port,
   the dust collecting device further including:
      a dust collecting hose that has a bellows-like part and through which dust flowing through the dust transfer passage is led to the outside of the dust transfer passage,
      a hose mounting region to which the dust collecting hose is attached so as to communicate with the dust transfer passage, and
      a dust collecting hose slip-offpreventing member that is provided in the hose mounting region and prevents the dust collecting hose attached to the hose mounting region from slipping out of the hose mounting region by engagement with the bellows-like part of the dust collecting hose.
(Aspect 2) The impact tool as defined in aspect 1, wherein the dust collecting device can be detached from the tool body, a dust collecting passage is formed in the tool body, and one end ofthe dust collecting hose is attached to the hose mounting region ofthe dust collecting device and the other end is attached to the tool body in such a manner as to communicate with the dust collecting passage.
(Aspect 3) The impact tool as defined in aspect 2, comprising a covering member for holding the dust collecting hose to extend along an outer surface of the hose mounting region, wherein the covering member also serves as a dust collecting hose slip-off preventing member.
(Aspect 4) The impact tool as defined in any one of aspects 1 to 3, wherein the tool body has an inner body in which a driving mechanism part for driving the tool bit is housed, and an outer-shell housing which covers at least part of the inner body and is connected to the inner body via a vibration-proofing elastic element in such a manner as to be allowed to move with respect to the inner body at least in the axial direction ofthe tool bit, and wherein the dust collecting device is mounted to the outer-shell housing and the dust collecting hose is connected between the inner body and the dust collecting device.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

### Description of Numerals

- 101: hammer drill (impact tool)
- 102: outer housing (tool body, outer-shell housing)
- 103: body (tool body, inner body)
- 105: motor housing
- 106: barrel
- 107: gear housing
- 109: handgrip
- 109A: grip region
- 109B: upper connecting region
- 109C: lower connecting region
- 109a: trigger
- 115: striking part
- 119: hammer bit (tool bit)
- 121: pivot
- 124: dust-proofing cover
- 137: tool holder
- 141: cylinder
- 141a: air chamber
- 143: striker
- 145: impact bolt
- 150: dust collecting attachment (dust collecting device)
- 151: cylindrical mounting part
- 153: front cylindrical portion
- 153a: small-diameter portion
- 153b: large-diameter portion
- 153c: tapered cylindrical portion
- 153d: opening
- 153e: mounting wall
- 153f: notch
- 154: rubber seal
- 155: rear cylindrical portion
- 155a: protrusion
- 155b: slit
- 155c: projection
- 155d: stepped portion
- 157: bit covering part
- 157a: passage (dust transfer passage)
- 157b: dust suction port
- 159: hose connecting part
- 159a: dust outlet
- 161: dust transfer hose (dust collecting hose)
- 161a: bellows-like part
- 163: hose cover (hose slip-off preventing member)
- 164, 165: engagement claw
- 167: engagement member
- 171: grip mounting part (body side mounting region)
- 173: recess (groove)
- 173a: front edge
- 175: ridge
- 181: side grip
- 183: band
- 185: base
- 185a: engagement surface
- 186: nut
- 187: grip
- 189: operation rod
- 191: dust collecting passage
- 191a: front open end
- 193: dust collector hose

## Claims

1. An impact tool (101) which performs a predetermined operation at least by linearly driving a tool bit (119) detachably coupled to a front end region of a tool body (102, 103) in its axial direction comprising:
a dust collecting device (150) that sucks and collects dust generated during an operation by the tool bit (119),
a body side mounting region (171) that is formed in the tool body (102, 103), the body side mounting region (171) attaching the dust collecting device (150) to the tool body (102, 103)
and
a dust collecting device side mounting region (155) that is formed in the dust collecting device (150), wherein:
one of the body side mounting region (171) and the dust collecting device side mounting region (155) has a plurality of projections (155c) which extend in an axis direction of the tool bit (119) and are arranged around the axis, and the other has a plurality of grooves (173) which extend in the axis direction of the tool bit (119) and are engaged with the projections (155c), and a plurality of ridges (175) provided between the grooves (173) around an axis of the tool bit (119),
the impact tool (101) further comprising:
a clamping member (181) that clamps the body side mounting region (171) and the dust collecting device side mounting region (155) by fitting thereon from the outside,
**characterized in that**:
when the dust collecting device (150) is attached to the tool body (102, 103) by engagement of the projections (155c) with the grooves (173), outer surfaces of the projections (155c) and top surfaces of the ridges (175) are flush with each other in the circumferential direction, and
the clamping member (181) uniformly clamps the regions flush with each other, whereby the dust collecting device (150) is fixedly attached to the tool body (102, 103).

2. The impact tool (101) as defined in claim 1, wherein the clamping member (181) comprises a side grip (181) which is removably attached to the tool body (102, 103) and designed to be held by a user in order to operate the impact tool (101).

3. The impact tool (101) as defined in claim 2, wherein the side grip (181) includes a band (183) which attaches the side grip (181) to the tool body (102, 103), while the band (183) also defines the clamping member (181) for the dust collecting device (150).

4. The impact tool (101) as defined in any one of claims 1 to 3, wherein at least one of the grooves (173) includes a slipping preventing mechanism (155d, 173a) such that the projection (155c) engaged with the groove (173) is prevented from slipping axially forward out of the grooves (173).

## Patentansprüche

1. Schlagwerkzeug (101), das einen vorbestimmten Arbeitsvorgang zumindest durch lineares Antreiben eines Werkzeugbits (119), das lösbar an einen vorderen Endbereich eines Werkzeugkörpers (102, 103) gekoppelt ist, in dessen axialer Richtung ausführt, mit
einer Staubsammelvorrichtung (150), die Staub, der während eines Arbeitsvorgangs durch das Werkzeugbit (119) erzeugt wird, ansaugt und sammelt,
einem körperseitigen Montagebereich (171), der an dem Werkzeugkörper (102, 103) ausgebildet ist, bei dem der körperseitige Montagebereich (171) die Staubsammelvorrichtung (150) an den Werkzeugkörper (102, 103) anbringt, und
einem Montagebereich (155) an der Seite der Staubsammelvorrichtung, der in der Staubsammelvorrichtung (150) ausgebildet ist, bei dem
einer von dem körperseitigen Montagebereich (171) und dem Montagebereich (155) an der Seite der Staubsammelvorrichtung eine Mehrzahl von Vorsprüngen (155c) aufweist, die sich in einer axialen Richtung des Werkzeugbits (119) erstreckt und um die Achse herum angeordnet sind, und der andere eine Mehrzahl von Nuten (173), die sich in der axialen Richtung des Werkzeugbits (119) erstreckt und mit den Vorsprüngen (155c) in Eingriff steht, und eine Mehrzahl von Rippen (175) aufweist, die zwischen den Nuten (173) um eine Achse des Werkzeugbits (119) vorgesehen ist,
das Schlagwerkzeug (101) weiter
ein Klemmbauteil (181) aufweist, das den körperseitigen Montagebereich und den Montagebereich (155) an der Seite der Staubsammelvorrichtung durch Passen darauf von der Außenseite klemmt,
**dadurch gekennzeichnet, dass**
wenn die Staubsammelvorrichtung (150) an den Werkzeugkörper (102, 103) durch Eingriff der Vorsprünge (155c) mit den Nuten (173) angebracht ist, äußere Oberflächen der Vorsprünge (155c) und obere Oberflächen der Rippen (175) miteinander in der Umfangsrichtung fluchten, und
das Klemmbauteil (181) einheitlich die Bereiche fluchtend miteinander klemmt, wodurch die Staubsammelvorrichtung (150) fest an dem Werkzeugkörper (102, 103) befestigt wird.

2. Schlagwerkzeug (101) nach Anspruch 1, bei dem das Klemmbauteil (181) einen seitlichen Griff (181) aufweist, der lösbar an dem Werkzeugkörper (102, 103) angebracht ist und zum Halten durch einen Benutzer zum Betätigen des Schlagwerkzeuges (101) konstruiert ist.

3. Schlagwerkzeug (101) nach Anspruch 2, bei dem der seitliche Griff (181) ein Band (183) enthält, das den seitlichen Griff (181) an den Werkzeugkörper (102, 103) befestigt, während das Band (183) ebenso das Klemmbauteil (181) für die Staubsammelvorrichtung (150) definiert.

4. Schlagwerkzeug (101) nach einem der Ansprüche 1 bis 3, bei dem zumindest eine von den Nuten (173) einen Gleitverhinderungsmechanismus (155d, 173a) enthält, so dass der Vorsprung (155c), der mit der Nut (173) in Eingriff steht, von einem Gleiten axial nach vorne aus der Nut (173) gehindert ist.

## Revendications

1. Outil à percussion (101) qui effectue une opération prédéterminée au moins par entraînement linéaire d'une mèche d'outil (119) couplée de manière détachable à une région d'extrémité frontale d'un corps d'outil (102, 103) dans sa direction axiale comprenant :
un dispositif de collecte de poussière (150) qui aspire et collecte la poussière générée au cours d'une utilisation de la mèche d'outil (119),
une région de montage côté corps (171) qui est formée dans le corps d'outil (102, 103), la région de montage côté corps (171) fixant le dispositif de collecte de poussière (150) au corps d'outil (102, 103) et
une région de montage côté dispositif de collecte de poussière (155) qui est formée dans le dispositif de collecte de poussière (150), où :
l'une parmi la région de montage côté corps (171) et la région de montage côté dispositif de collecte de poussière (155) a une pluralité de protubérances (155c) qui s'étendent dans une direction d'axe de la mèche d'outil (119) et sont agencées autour de l'axe, et l'autre a une pluralité de rainures (173) qui s'étendent dans la direction d'axe de la mèche d'outil (119) et sont engagées avec les protubérances (155c), et une pluralité d'arêtes (175) prévues entre les rainures (173) autour d'un axe de la mèche d'outil (119),
l'outil à percussion (101) comprenant en outre :
un élément de serrage (181) qui serre la région de montage côté corps (171) et la région de montage côté dispositif de collecte de poussière (155) en se fixant dessus depuis l'extérieur,
**caractérisé en ce que** :
lorsque le dispositif de collecte de poussière (150) est fixé au corps d'outil (102, 103) par engagement des protubérances (155c) avec les rainures (173), des surfaces extérieures des protubérances (155c) et des surfaces supérieures des arêtes (175) sont alignées les unes avec les autres dans la direction circonférentielle, et
l'élément de serrage (181) serre de manière uniforme les régions alignées les unes avec les autres, moyennant quoi le dispositif de collecte de poussière (150) est fixé de manière fixe au corps d'outil (102, 103).

2. Outil à percussion (101) selon la revendication 1, dans lequel l'élément de serrage (181) comprend une poignée latérale (181) qui est fixée de manière amovible au corps d'outil (102, 103) et conçue pour être tenue par un utilisateur afin d'utiliser l'outil à percussion (101).

3. Outil à percussion (101) selon la revendication 2, dans lequel la poignée latérale (181) comprend une bande (183) qui fixe la poignée latérale (181) au corps d'outil (102, 103), tandis que la bande (183) définit également l'élément de serrage (181) pour le dispositif de collecte de poussière (150).

4. Outil à percussion (101) selon l'une quelconque des revendications 1 à 3, dans lequel au moins l'une des rainures (173) comprend un mécanisme d'empêchement du glissement (155d, 173a) de telle sorte que la protubérance (155c) engagée avec la rainure (173) est empêchée de glisser axialement vers l'avant en dehors des rainures (173).
